# EUROPEAN PATENT SPECIFICATION

(11) **EP 2 112 484 B1**
(45) Date of publication and mention of the grant of the patent: **05.01.2011**
(21) Application number: 08164334.8
(22) Date of filing: 15.09.2008
(51) Int. Cl.: G01J 5/04, H04N 5/225, H04N 5/33

(54) **Thermal Imager with detachable handle**
Thermische Kamera mit abnehmbarem Griff
Imageur thermique à verrouillage relachable

(30) Priority: 24.04.2008 CN 200820080163 U
(43) Date of publication of application: 28.10.2009
(73) Proprietor: Guangzhou SAT Infrared Technology Co., Ltd., Guangzhou Economic & Techn. Development District Guangzhou 510730 (CN)
(72) Inventor: Wu, Jiping, 510730 Guangzhou (CN)
(74) Representative: Gervasi, Gemma

(56) References cited:
- US-A- 5 736 726
- US-B1- 7 250 603

## Description

### Field of Invention

The present invention relates to the field of infrared, specifically to a thermal imager.

### Background of the technology

Thermal imager is a device that detects infrared radiation in a non-contact way, converts the distribution of heat on the surface of an object to thermal images and temperature values that are shown on a display. Nowadays, thermal imagers of all types are widely used in the field of power plant maintenance, metallurgy, coal mining and fire fighting, etc.

The environment where some types of thermal imagers are used is very complicated. For example, when detecting machines or electric devices in an environment where there is a potential danger of fire or explosion, the operator, sometimes, needs to use something to knock the object to deal with an unexpected incident. The only thing at hand that the operator can use may be the thermal imager. However, if the operator uses the thermal imager to knock the object, the electronic elements in the thermal imager will be damaged, leading to the reparation costs or even leading to complete damage of the thermal imager. Thermal imagers with detachable handle are known form US 7250603.

### Summary of the Invention

The object of the present invention is to provide a thermal imager that is designed to have a handle structure so that the thermal imager can be used by one hand in a confined space. In addition, the thermal imager has a structure in which the handle and the body of the thermal imager can be separated from each other, so that the handle can be taken of the thermal imager and used as a tool to knock objects

In order to achieve this objective, the present invention provides a thermal imager comprising a detecting device having a housing, and a handle. The handle is provided with a movable lock tongue, a protruding stop block and at least one groove, the lock tongue being connected to a push button. The housing is provided with a jack, one or more protuberances, and one or more spring pins. The handle and the housing of the detecting device are fixed together in a snap-in way. The lock tongue of the handle inserts into the jack of the housing and joints the jack. The protuberances of the housing joint the grooves of the handle and the spring pins of the housing contact against the stop block of the handle.

Preferably, the bottom surface of the housing is configured to be a first plane, and the bottom surface of the handle is configured to be a second plane, the first plane and the second plane being in the same horizontal plane.

Preferably, the handle is designed to be in annular shape.

Preferably, the rear end surface of the housing is configured to be a third plane with a hollow slot. Two spring pins are arranged at the bottom of the hollow slot.

Preferably, a jack is arranged on the third plane above the top of the hollow slot.

Preferably, there are 4 protuberances on the third plane.

Preferably, the front end surface of the handle is configured to be a fourth plane with a movable lock tongue on the upper portion of the fourth plane. The handle is connected to the housing of the detecting device with the third plane contacting the fourth plane and the lock tongue protruding into the jack on the third plane.

Preferably, there is a push button on the top surface of the handle which is connected to the lock tongue by a spring. The push button actuates the lock tongue to protrude and retract from the fourth plane.

Preferably, there is a stop block at the lower portion of the fourth plane. The handle is connected to the housing of the detecting device with the third plane contacting the fourth plane and the stop block protruding into the slot on the third plane. The stop block contacts against the spring pins.

Preferably, there are two vertical grooves on the fourth plane. The handle is connected to the housing of the detecting device with the third plane contacting the fourth plane and the protuberances on the third plane protruding into the grooves on the fourth plane.

Preferably, the section of the grooves and the section of the protuberances are made in corresponding shape of trapezium.

Preferably, the thermal imager further comprises an infrared optical lens arranged at the front end of the housing.

Preferably, the thermal imager further comprises a display and a control panel. The display and the control panel are positioned on the top surface of the housing.

The thermal imager of the present invention has many advantages. The handle and the body of the detecting device can be separated from each other, and are fixed together by elastic force in a snap connection way, and therefore, the handle can be easily released from the body of the thermal imager by unlocking the handle from the body of the detecting device, so that the handle can be used to knock objects in an emergency state. In addition, because the handle is connected to the rear end of the detecting device so that the width of the thermal imager is shorter than the length of thermal imager, and because the bottom of the thermal imager is designed as a plane, the thermal imager of the present invention can be used on a plane and can be used in narrower spaces.

### Brief Description of the Drawings

Fig.1 is a three dimensional view schematically illustrating the structure of the thermal imager according to the present invention.
Fig. 2 is a three dimensional view of back right side, schematically illustrating the structure of the thermal imager according to the present invention in a state of separation.
Fig. 3 is another three dimensional view of front right side, schematically illustrating the structure of the thermal imager according to the present invention in a state of separation.
Fig. 4 is a partial cutaway view schematically illustrating the structure of the thermal imager according to the present invention in a state of the handle and the body of the detecting device being connected together.
Fig. 5 is a view schematically illustrating the circuity of the infrared detecting device of the thermal imager according to the present invention.

### Detailed Description of the preferred embodiments

The object, technical solutions, and advantages of the present invention can be more understood by the following detailed description of the invention with reference to the drawings and embodiments

The thermal imager of the present invention comprises a handle and a detecting device. The detecting device has a protective housing covering it. The handle and the housing of the detecting device are separate from each other, and are fixed together by elastic force in a snap connection way. In this way, the handle and the housing of the detecting device can be separated according to their respective requirements, and because the handle and the housing of the detecting device are fixed together by elastic force in a snap connection way, not by bolt connection or rivet connection, the handle can be easily released from the thermal imager by unlocking the handle and the housing of the detecting device by push button.

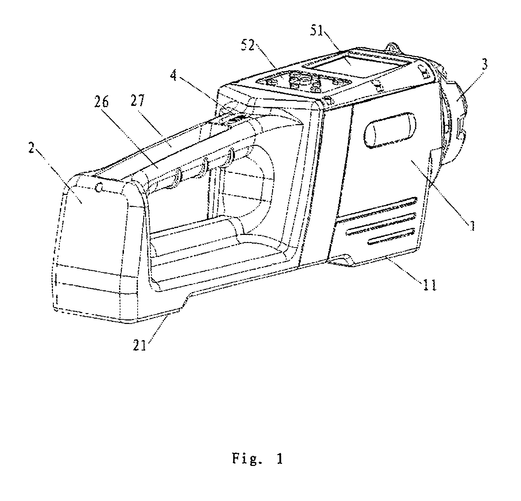

This handle-separated structure of the thermal imager is mainly used in anti-explosion thermal imaging, so the following detailed description of the invention is made by taking the anti-explosion thermal imager as an example. Figs. 1 to 3 are the three-dimensional views illustrating the structure of the anti-explosion thermal imager. As shown in Fig. 1, the anti-explosion thermal imager of the present invention comprises an infrared optical lens 3, a housing 1, a display 51, a control panel 52, and a handle 2. The anti-explosion thermal imager of the present invention is not limited to the above structure. The persons skilled in the art will also figure out that the anti-explosion thermal imager can also comprise, according to the practical needs, a combination of one or some of the following devices: a lamp, a visible light camera, a laser pointer, and an interface such as USB.

As shown in Fig. 1, in the embodiment of the anti-explosion thermal imager of the present invention, the detecting device comprises a housing 1. An infrared optical lens 3 is positioned at the front end of housing 1. A handle 2 is positioned at the rear end of housing 1. The length direction of handle 2 is in line with the length direction of housing 1 so that the width of the anti-explosion thermal imager is shorter than the length of anti-explosion thermal imager; thereby the anti-explosion thermal imager can be used in narrower spaces.

Furthermore, the bottom surface of the housing 1 is configured to be a first plane 11, and the bottom surface of the handle 2 is configured to be a second plane 21, the first plane 11 and the second plane 21 being in the same horizontal plane. By way of the first plane 11 and the second plane 21 positioned at the front and the rear respectively, the anti-explosion thermal imager of the present invention can be placed horizontally. In the embodiment of the present invention, the first plane 11 is at the front portion of housing 1, and the second plane 21 is at the rear portion of handle 2, but not limited to this arrangement. The first plane 11 and the second plane 21 can be made up of several planes in order to place the thermal imager steadily.

In the embodiment of the anti-explosion thermal imager of the present invention, the handle 2 is designed to be in annular shape in order to be held easily by one hand. As shown in Figs. 1 to 3, the radial dimension of the grip_26 of the handle 2 should be designed for one hand to hold, and the interior of the grip 26 is provided with several grooves for fingers to hold conveniently and comfortably, and furthermore, the grooves can increase the friction between the grip 26 and the hand so that the thermal imager is prevented from sliding out of the hand. The persons skilled in the art can understand that the handle 2 can be made of materials such as metal, plastic, or resin. The handle 2 of the embodiment of the anti-explosion thermal imager of the present invention can also be made of the metals with high specific gravity so that the thermal imager can be used to knock objects in an emergency state. In order to avoid the handle 2 being too heavy, the handle 2 can be designed to be hollow in its proper portion. For example, the handle 26 has a hollow slot 27, as shown in Fig. 1. In addition, the handle of the thermal imager of the present invention is not limited to the above structures; instead it can be designed to be in other shapes, for example, I-shaped handle.

The handle 2 and the housing 1 of the detecting device are fixed together in a snap connection way by elastic force. There is a push button 4 on the top surface of the handle 2. The handle 2 can be easily released from the thermal imager by pushing the push button 4. In an emergency state, the handle 2 that is released from the thermal imager can be used to knock objects, and thereby the electronic elements in the thermal imager are avoid from damage. In addition, the handle 2 can be released from the thermal imager to reduce the weight of the thermal imager when the operator takes the thermal imager with him.

The following is a description of the connection of the handle 2 and the housing 1 of the detecting device.

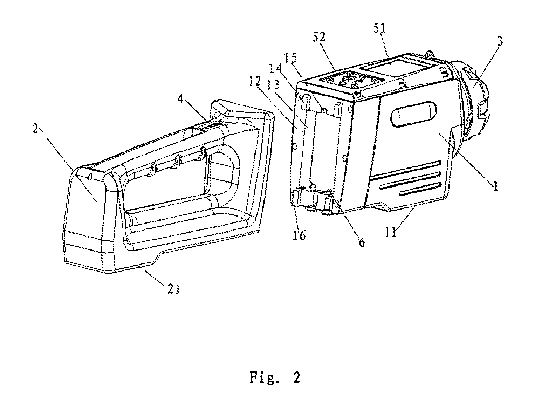

As shown in Fig. 2, the rear end surface of the housing 1 is configured to be a plane 12 with a rectangular hollow slot 13. A jack 15 is at the top edge of the rectangular hollow slot 13. One or more spring pins 6 are arranged at the bottom of the rectangular hollow slot 13. In this embodiment, there are 2 spring pins. There are two protuberances 14 and two protuberances 16 at the upper portion and the lower portion of the plane 12 respectively. The two protuberances 14 and the two protuberances 16 have the same structure. Each two protuberances are arranged along a horizontal line, and one of the protuberances 14 and one of the protuberances 16 are arranged along a vertical line (see Fig. 2).

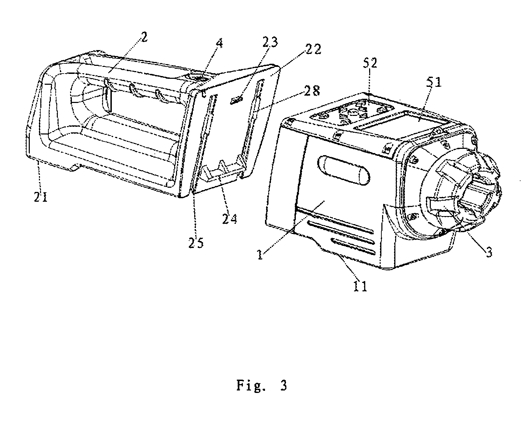

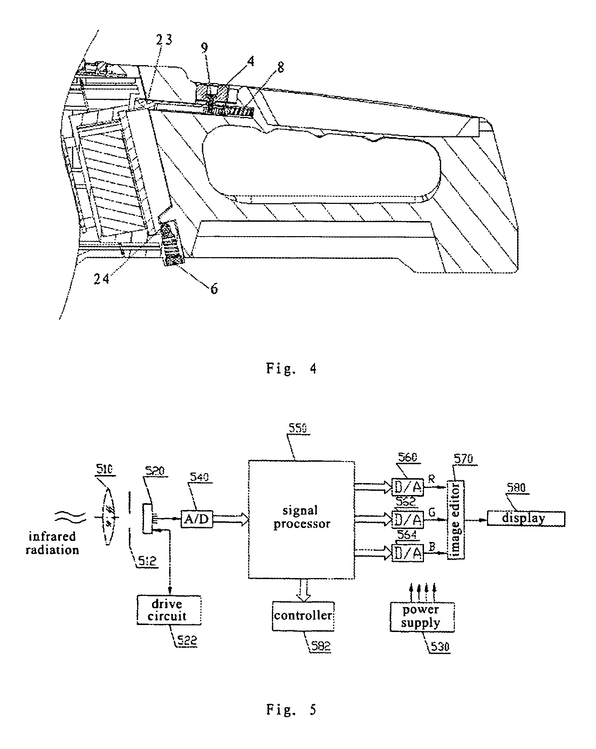

As shown in Fig. 3 & 4, the front end surface of the handle 2 is configured to be a plane 22 with a movable lock tongue 23 on it. The rear end of the lock tongue 23 is connected to a spring 8. The lock tongue 23 is pulled by the spring 8 that is actuated by the push button 4 through a bolt 9. When the push button 4 is pushed back and forth by hand, the bolt 9 actuates the lock tongue 23 to protrude and retract from the plane 22. There is a stop block 24 at the lower portion of the plane 22. The width of the stop block 24 is corresponding to the distance between the two spring pins 6 on the housing 1. Furthermore, two grooves 25 are arranged in the vertical direction on either side of the lock tongue 23 with the bottom end of the groove 25 extending to the bottom edge of the plane 22.

When the handle 2 with above structure is connected to the housing 1, the protuberances 14 and 16 slide into the grooves 25 from the bottom of the grooves 25 and thereby engage the grooves 25. In order to facilitate the protuberances 14 to slide into the grooves 25 smoothly, the diameter of the section of the middle portion 28 of the grooves 25 is bigger than the diameter of the section of the two ends of the grooves 25, as shown in Fig. 3, and thereby, moving the handle 2 and the housing 1 with respect to each other to make the protuberances 14 and 16 slide along the grooves 25, and meanwhile make the plane 12 and the plane 22 engage each other. When the handle 2 and the housing 1 move in respect to each other to make the lock tongue 23 protrude into the jack 15 on the plane 12, the stop block 24 protrudes into the rectangular hollow slot 13 on the plane 12 and contacts against the spring pins 6. By way of spring force of the spring pins 6, the lock tongue 23 is fixed into the jack 15. Preferably, the section of the grooves 25 is made in shape of trapezium, and accordingly the section of the protuberances 14 and 16 is made in corresponding shape of trapezium, so that the handle 2 and the housing 1 can engage each other firmly.

If the operator wants to release or take off the handle 2 from the thermal imager, the operator just pulls back the push button 4 to retract the lock tongue 23 back into the handle 2, and then moves the handle 2 and the housing 1 with respect to each other to make the protuberances 14 and 16 slide out of the grooves 25. By doing this, the handle 2 and the housing 1 can be easily separated from each other.

It can be understood that the handle 2 and the housing 1 can engage each other firmly by other means of protruding fitting groove. For example, the stop block 24 can be changed as a movable member whose movement is controlled by a push button, so that the elastic force of the spring pin against the handle can be changed, and thereby realize the above purpose. Therefore, there arc many means to realize the engagement of the handle and the housing by elastic force. The detailed description of these means is omitted for simplicity purpose.

The anti-explosion thermal imager of the present invention further comprises an infrared optical lens, a display, a housing 1, and a control panel.

As shown in Figs. 1 to 3, in the present invention, an infrared optical lens 3 is arranged at the front end of the housing 1. The infrared optical lens 3 together with another one or more infrared optical lenses constitutes an infrared optical lens system. When the shutter of the detecting device opens, the infrared optical lens 3 guides absorbed infrared radiation to the infrared detector through the shuttle.

A display 51 and a control panel 52 are positioned on the top surface of the housing 1 by a shell 5. For turning on and off, the switch of the thermal imager is positioned on the control panel 52. When the operator holds the thermal imager with one hand, he can perform operations on the control panel 52 with the other hand and watch the image on the display 51. Alternatively, like the conventional infrared thermal imager, the anti-explosion thermal imager of the present invention can also be designed to arrange the display 51 at the side surface of the housing 1 through a pivot; when the display is turned off, the display is folded on the side surface of the housing 1 and concealed, and when the display is turned on by turning the pivot, the display can be rotated to a proper position for the operator to watch.

In order to make the anti-explosion thermal imager of the present invention waterproof, the housing 1 is provided with a junction hole for nitrogen inflating so that nitrogen can be input into the thermal imager to make the air pressure inside the thermal imager higher than the air pressure outside the thermal imager. Furthermore, the housing 1 is provided with a barometer to show the air pressure value inside the thermal imager so that the air pressure inside the thermal imager can be monitored. The junction hole and the barometer are positioned on the bottom surface 11 of the thermal imager. In addition, there is a power socket on the bottom surface 11.

In the anti-explosion thermal imager of the present invention, the battery assembly of the detecting device is arranged inside the housing of the detecting device. Further, the housing can be provided with a combination of one or some of the following devices: a lamp, a visible light camera, a laser pointer, a USB interface and an audio device interface.

Fig. 5 shows the preferable embodiment of photoelectric module of the detecting device of the anti-explosion thermal imager of the present invention. It is understood that the persons skilled in the art can modify the members of the photoelectric module of the detecting device without damaging the purpose of the present invention, according to practical needs.

The photoelectric module for detecting infrared radiation comprises an infrared optical lens 510, a shutter 512, an infrared detector 520, a drive circuit 522, a power supply 530, an analogue to digital converter 540, a signal processor 550, digital to analogue converters 560, 562, 564, an image coder 570, a display 580, and a controller 582.

The infrared optical lens 510 can be the infrared optical lens 3 in Fig. 1 for absorbing infrared radiation and for directing the infrared radiation through when the shutter 512 opens.

The infrared detector 520 is driven by the signal from the drive circuit 522, and then produces a corresponding electric signal according to the detected infrared radiation. The electric signal is then converted by the analogue-digital converter 540 to digital signal and transmitted to the signal processor 550.

The signal processor 550 processes the received digital signal including the signal from the analogue-digital converter 540 and the signal from the controller 582.

The signal processor 550 transmits the processed digital signal to the digital to analogue converters 560, 562, 564 which then convert the processed digital signal to an analogue signal and transmits the converted analogue signal to the image coder 570. The image coder 570 then produces a display signal according to the received analogue signal and transmits the display signal to the display 580. The display signals transmitted by the image coder 570 to the display 580 can include audio signals. In addition, the signal produced by the image coder 570 can be transmitted to a computer, or a TV, or a memorizer, etc. by a USB interface

The anti-explosion thermal imager of the present invention can also be provided with a microphone, a loudspeaker, a memorizer, etc. The anti-explosion thermal imager of the present invention can be connected to a microphone, a loudspeaker, a memorizer, etc. by USB.

The controller 582 can transmit the received audio input signal from the microphone to the signal processor 550. The controller 582 can also receive the digital signal from the signal processor 550 and produce an audio output signal according to the digital signal from the signal processor 550 and transmit the produced audio output signal to a loudspeaker. The controller 582 can store the digital signal, audio signal, etc. on the memorizer.

The infrared detector 520, the drive circuit 522, the power supply 530, the analogue to digital converter 540, the signal processor 550, the digital to analogue converters 560, 562, 564, the image coder 570, and the controller 582 of the photoelectric module of the detecting device are arranged in the housing 1.

In the anti-explosion thermal imager of the present invention with the structure described above, the handle and the housing of the detecting device are separated from each other, and are fixed together by elastic force in a snap connection way, and therefore, the handle can be released from the housing simply by the thumb, by pushing the push button to make the protuberances slide out of the grooves of the handle, and thereby, the handle can be released from the housing and used to knock objects in an emergency state. In addition, because the handle is connected to the rear end of the detecting device so that the width of the anti-explosion thermal imager is shorter than the length of anti-explosion thermal imager, and because the bottom of the thermal imager is designed as a plane, the thermal imager of the present invention can be used on a plane and can be used in narrower spaces.

The above description is a preferred embodiment of the thermal imager of the present invention. It should be understood that modification and variation can be made within the principle of the present invention, and modifications and variations fall within the protection scope of the present invention.

## Claims

1. A thermal imager comprising a detecting device having a housing (1), **characterized in that** said thermal imager further comprises a handle (2),
the handle (2) being provided with a movable lock tongue (23), a protruding stop block (24) and at least one groove (25), the lock tongue (23) being connected to a push button (4),
the housing being provided with a jack (15), one or more protuberances (14,16), and one or more spring pins (6).
the handle and the housing of the detecting device being fixed together in a snap connection way, the lock tongue (23) of the handle (2) inserting into the jack (15) of the housing (11) and engaging the jack (15), the protuberances (14,16) of the housing (1) engaging the grooves (25) of the handle (2) and the spring pins (6) of the housing (1) contacting against the stop block (24) of the handle (2).

2. A thermal imager according to claim 1, **characterized in that** the bottom surface of the housing is configured to be a first plane, and the bottom surface of the handle is configured to be a second plane, the first plane and the second plane being in the same horizontal plane.

3. A thermal imager according to claim 1, **characterized in that** the handle is designed to be in annular shape.

4. A thermal imager according to claim 1, **characterized in that** the rear end surface of the housing is configured to be a third plane with a rectangular hollow slot, and two spring pins are arranged at the bottom of the rectangular hollow slot.

5. A thermal imager according to claim 4, **characterized in that** a jack is arranged on the third plane at the top of the rectangular hollow slot.

6. A thermal imager according to claim 5, **characterized in that** there are 4 protuberances on the third plane.

7. A thermal imager according to claim 6, **characterized in that** the front end surface of the handle is configured to be a fourth plane with a movable lock tongue on the upper portion of the fourth plane, and the handle is connected to the housing of the detecting device with the third plane contacting the fourth plane and the lock tongue protruding into the jack on the third plane.

8. A thermal imager according to claim 7, **characterized in that** there is a push button on the top surface of the handle which is connected to the lock tongue by a spring, and the push button actuates the lock tongue to protrude and retract from the fourth plane.

9. A thermal imager according to claim 7, **characterized in that** there is a stop block at the lower portion of the fourth plane, and the handle is connected to the housing of the detecting device with the third plane contacting the fourth plane and the stop block protruding into the slot on the third plane, and the stop block contacts against the spring pins.

10. A thermal imager according to claim 9, **characterized in that** there are two vertical grooves on the fourth plane, and the handle is connected to the housing of the detecting device with the third plane contacting the fourth plane and the protuberances on the third plane protruding into the grooves on the fourth plane.

11. A thermal imager according to claim 10, **characterized in that** the section of the grooves and the section of the protuberances are made in corresponding shape of trapezium.

12. A thermal imager according to claim 1, **characterized in that** the thermal imager further comprises an infrared optical lens arranged at the front end of the housing.

13. A thermal imager according to claim 1, **characterized in that** the thermal imager further comprises a display and a control panel, the display and the control panel being positioned on the top surface of the housing.

## Patentansprüche

1. Wärmebildkamera, die eine Erfassungsvorrichtung umfasst, die ein Gehäuse (1) aufweist, **dadurch gekennzeichnet, dass** die genannte Wärmebildkamera ferner einen Griff (2) umfasst,
wobei der Griff (2) mit einer beweglichen Verriegelungszunge (23), mit einem vorstehenden Anschlagblock (24) und mit wenigstens einer Nut (25) versehen ist, wobei die Verriegelungszunge (23) mit einem Druckknopf (4) verbunden ist,
wobei das Gehäuse mit einer Buchse (15), mit einem oder mehreren Vorsprüngen (14, 16) und mit einem oder mehreren Federstiften (6) versehen ist,
wobei der Griff und das Gehäuse der Erfassungsvorrichtung zusammen nach Art einer Schnappverbindung aneinander befestigt sind, wobei die Verriegelungszunge (23) des Griffs (2) in die Buchse (15) des Gehäuses (11) eingeführt ist und mit der Buchse (15) in Eingriff ist, wobei die Vorsprünge (14, 16) des Gehäuses (1) mit den Nuten (25) des Griffs (2) in Eingriff sind und wobei die Federstifte (6) des Gehäuses (1) den Anschlagblock (24) des Griffs (2) berühren.

2. Wärmebildkamera gemäß Anspruch 1, **dadurch gekennzeichnet, dass** die Unterseite des Gehäuses als eine erste Ebene konfiguriert ist und dass die Unterseite des Griffs als eine zweite Ebene konfiguriert ist, wobei die erste Ebene und die zweite Ebene in derselben horizontalen Ebene liegen.

3. Wärmebildkamera gemäß Anspruch 1, **dadurch gekennzeichnet, dass** der Griff ringförmig ausgelegt ist.

4. Wärmebildkamera gemäß Anspruch 1, **dadurch gekennzeichnet, dass** die hintere Stirnfläche des Gehäuses als eine dritte Ebene mit einem rechteckigen hohlen Schlitz konfiguriert ist und dass unten an dem rechteckigen hohlen Schlitz zwei Federstifte angeordnet sind.

5. Wärmebildkamera gemäß Anspruch 4, **dadurch gekennzeichnet, dass** oben an dem rechteckigen hohlen Schlitz eine Buchse angeordnet ist.

6. Wärmebildkamera gemäß Anspruch 5, **dadurch gekennzeichnet, dass** auf der dritten Ebene 4 Vorsprünge vorhanden sind.

7. Wärmebildkamera gemäß Anspruch 6, **dadurch gekennzeichnet, dass** die vordere Stirnfläche des Griffs als eine vierte Ebene mit einer beweglichen Verriegelungszunge an dem oberen Abschnitt der vierten Ebene konfiguriert ist und dass der Griff mit dem Gehäuse der Erfassungsvorrichtung verbunden ist, wobei die dritte Ebene die vierte Ebene berührt und die Verriegelungszunge in die Buchse auf der dritten Ebene vorsteht.

8. Wärmebildkamera gemäß Anspruch 7, **dadurch gekennzeichnet, dass** auf der Oberseite des Griffs ein Druckknopf vorhanden ist, der durch eine Feder mit der Verriegelungszunge verbunden ist, und dass der Druckknopf die Verriegelungszunge betätigt, damit sie aus der vierten Ebene vortritt und einfährt.

9. Wärmebildkamera gemäß Anspruch 7, **dadurch gekennzeichnet, dass** in dem unteren Abschnitt der vierten Ebene ein Anschlagblock vorhanden ist und dass der Griff mit dem Gehäuse der Erfassungsvorrichtung verbunden ist, wobei die dritte Ebene die vierte Ebene berührt und der Anschlagblock in den Schlitz an der dritten Ebene vorsteht und wobei der Anschlagblock die Federstifte berührt.

10. Wärmebildkamera gemäß Anspruch 9, **dadurch gekennzeichnet, dass** an der vierten Ebene zwei vertikale Nuten vorhanden sind und dass der Griff mit dem Gehäuse der Erfassungsvorrichtung verbunden ist, wobei die dritte Ebene die vierte Ebene berührt und wobei die Vorsprünge an der dritten Ebene in die Nuten an der vierten Ebene vorstehen.

11. Wärmebildkamera gemäß Anspruch 10, **dadurch gekennzeichnet, dass** der Querschnitt der Nuten und der Querschnitt der Vorsprünge entsprechend trapezförmig hergestellt sind.

12. Wärmebildkamera gemäß Anspruch 1, **dadurch gekennzeichnet, dass** die Wärmebildkamera ferner eine Infrarotoptiklinse umfasst, die am vorderen Ende des Gehäuses angeordnet ist.

13. Wärmebildkamera gemäß Anspruch 1, **dadurch gekennzeichnet, dass** die Wärmebildkamera ferner eine Anzeige und ein Bedienfeld umfasst, wobei die Anzeige und das Bedienfeld an der Oberseite des Gehäuses positioniert sind.

## Revendications

1. Imageur thermique comprenant un dispositif de détection ayant un boîtier (1) **caractérisé en ce que** ledit imageur thermique comprend en outre une poignée (2),
la poignée (2) étant prévue avec une languette de blocage mobile (23), un bloc de butée en saillie (24) et au moins une rainure (25), la languette de blocage (23) étant raccordée à un bouton poussoir (4),
le boîtier étant prévu avec un connecteur femelle (15), une ou plusieurs protubérances (14, 16) et une ou plusieurs goupilles élastiques (6),
la poignée et le boîtier du dispositif de détection étant fixés ensemble pour une liaison par encliquetage, la languette de blocage (23) de la poignée (2) s'insérant dans le connecteur femelle (15) du boîtier (1) et mettant en prise le connecteur femelle (15), les protubérances (14, 16) du boîtier (1) mettant en prise les rainures (25) de la poignée (2) et les goupilles élastiques (6) du boîtier (1) étant en contact contre le bloc du butée (24) de la poignée (2).

2. Imageur thermique selon la revendication 1, **caractérisé en ce que** la surface inférieure du boîtier est configurée pour être un premier plan, et la surface inférieure de la poignée est configurée pour être un deuxième plan, le premier plan et le deuxième plan étant dans un même plan horizontal.

3. Imageur thermique selon la revendication 1, **caractérisé en ce que** la poignée est conçue pour avoir une forme annulaire.

4. Imageur thermique selon la revendication 1, **caractérisé en ce que** la surface d'extrémité arrière du boîtier est configurée pour être un troisième plan avec une fente creuse rectangulaire, et deux goupilles élastiques sont agencées au fond de la fente creuse rectangulaire.

5. Imageur thermique selon la revendication 4, **caractérisé en ce qu'**un connecteur femelle est agencé sur le troisième plan au niveau de la partie supérieure de la fente creuse rectangulaire.

6. Imageur thermique selon la revendication 5, **caractérisé en ce qu'**il y a 4 protubérances sur le troisième plan.

7. Imageur thermique selon la revendication 6, **caractérisé en ce que** la surface d'extrémité avant de la poignée est configurée pour être un quatrième plan avec une languette de blocage mobile sur la partie supérieure du quatrième plan, et la poignée est raccordée au boîtier du dispositif de détection avec le troisième plan en contact avec le quatrième plan et la languette de blocage faisant saillie dans le connecteur femelle sur le troisième plan.

8. Imageur thermique selon la revendication 7, **caractérisé en ce qu'**il y a un bouton poussoir sur la surface supérieure de la poignée qui est raccordé à la languette de blocage par un ressort, et le bouton poussoir actionne la languette de blocage pour faire saillie et se rétracter du quatrième plan.

9. Imageur thermique selon la revendication 7, **caractérisé en ce qu'**il y a un bloc de butée au niveau de la partie inférieure du quatrième plan, et la poignée est raccordée au boîtier du dispositif de détection avec le troisième plan en contact avec le quatrième plan et le bloc de butée faisant saillie dans la fente sur le troisième plan, et le bloc de butée est en contact avec les goupilles élastiques.

10. Imageur thermique selon la revendication 9, **caractérisé en ce qu'**il y a deux rainures verticales sur le quatrième plan, et la poignée est raccordée au boîtier du dispositif de détection avec le troisième plan en contact avec le quatrième plan et les protubérances sur le troisième plan faisant saillie dans les rainures sur le quatrième plan.

11. Imageur thermique selon la revendication 10, **caractérisé en ce que** la section des rainures et la section des protubérances sont réalisées selon une forme de trapèze correspondante.

12. Imageur thermique selon la revendication 1, **caractérisé en ce que** l'imageur thermique comprend en outre une lentille optique infrarouge agencée au niveau de l'extrémité avant du boîtier.

13. Imageur thermique selon la revendication 1, **caractérisé en ce que** l'imageur thermique comprend en outre un écran et un panneau de commande, l'écran et le panneau de commande étant positionnés sur la surface supérieure du boîtier.
